# EUROPEAN PATENT APPLICATION

(11) **EP 4 458 900 A1**
(43) Date of publication of application: **06.11.2024**
(21) Application number: 22916155.9
(22) Date of filing: 27.12.2022
(51) Int. Cl.: C08L 29/04, C08F 8/42, C08F 16/06, C08K 3/22, C08L 101/00, H01M 50/414, H01M 50/417, H01M 50/434, H01M 50/443, H01M 50/446, H01M 50/451

(54) **COMPOSITION CONTAINING INORGANIC/ORGANIC HYBRID COMPOUND**

(30) Priority: 28.12.2021 JP 2021215328
(71) Applicant: SHIN-ETSU CHEMICAL CO., LTD., Tokyo 1000005 (JP); Japan Vam & Poval Co., Ltd., Sakai-shi, Osaka 592-8331 (JP)
(72) Inventor: SAWA Haruo, Kochi-shi, Kochi 781-8005 (JP); OHARUDA Akinobu, Sakai-shi, Osaka 592-8331 (JP); KIMURA Yoshihiro, Sakai-shi, Osaka 592-8331 (JP); KANESATO Shuhei, Tokyo 100-0005 (JP)
(74) Representative: Kraus & Lederer PartGmbB
(86) International application number: PCT/JP2022/048432
(87) International publication number: WO 2023/127933

(57) **Abstract**

Provided is a novel composition, in particular, a composition comprising an inorganic-organic hybrid compound. The composition comprises an inorganic-organic hybrid compound and a hydrophobic resin, wherein the inorganic-organic hybrid compound comprises a polyvinyl alcohol-based resin to which a metal oxide is chemically bonded.

## Description

### TECHNICAL FIELD

The present invention relates to a novel composition, in particular, a composition comprising an inorganic-organic hybrid compound, and a novel composition useful for a separator, etc. for an electrolytic device or a battery using an (aqueous) alkaline electrolyte, and relates to others.

### BACKGROUND ART

Electrolytic devices and batteries using an alkaline electrolyte are conventionally known.

Electrolytic devices using an alkaline electrolyte have been turned to practical use as electrolytic hydrogen generators. Electrolytic hydrogen generators are capable of producing hydrogen through electrolysis of water by applying voltage on a pair of two electrodes separated by a separator made of a porous sheet in an alkaline electrolyte. The electrodes are typically made of nickel. The separator is typically used to be made of asbestos and now made of a porous sheet such as a non-woven fabric of polyphenylene sulfide fibers. Other types of separators have also been proposed, including a porous membrane made of a mixture of an organic polymer and an inorganic compound particles (Patent literature 1 and 2). Electrolytic devices used in practice are assembled by serially stacking a large number of unit cells serving as base units so that many cells are energized at once to obtain a large amount of hydrogen. The cells are usually heated at about 80°C to increase energy efficiency.

There are many types of batteries using an aqueous alkaline electrolyte, including, for example, alkaline dry batteries, nickel-cadmium batteries, nickel-hydrogen batteries, nickel-iron batteries, nickel-zinc batteries, zinc-air batteries and alkaline fuel cells. These batteries are composed of positive and negative electrodes separated by a separator made of a porous sheet, and the electrodes and the separator contain an alkaline electrolyte. The electrodes may be of various types depending on the types of batteries. The separator may typically be a porous sheet of a non-woven fabric made of various types of an organic polymer material, for example. The separator for alkaline fuel cells is used to be a porous sheet made of the inorganic material asbestos.

### CITATION LIST

### PATENT LITERATURE

Patent Literature 1: JP 2020-050908 A
Patent Literature 2: JP 2018-126318 A
Patent Literature 3: JP Patent No. 3848882
Patent Literature 4: JP Patent No. 4081343
Patent Literature 5: JP Patent No. 5095249
Patent Literature 6: JP Patent No. 4871225
Patent Literature 7: JP Patent No. 6088932

### SUMMARY OF INVENTION

### TECHNICAL PROBLEM

An object of the present invention is to provide a novel composition, in particular, a composition comprising an inorganic-organic hybrid compound, and others.

Another object of the present invention is to provide a novel membrane having excellent alkali resistance, in particular, excellent heat and alkali resistance, in particular, a membrane formed of a composition comprising an inorganic-organic hybrid compound.

Another object of the present invention is to provide a method for producing a novel membrane, in particular, a method for producing a membrane formed of a composition containing an inorganic-organic hybrid compound.

Another object of the present invention is to provide a method for producing a membrane formed of a composition comprising an inorganic-organic hybrid compound, wherein a heating step under acidic conditions is unnecessary.

### SOLUTION TO PROBLEM

In an electrolytic hydrogen generator, when direct voltage is applied to a pair of two electrodes separated by a separator, hydrogen gas is generated from the cathode, and oxygen gas is generated from the anode (reaction equations (1) and (2)).

Reaction equation (1) 2H₂O + 2e⁻ → H₂ + 2OH⁻

Reaction equation (2) 2OH⁻ → 1/2O₂ + H₂O + 2e⁻

To proceed these reactions, hydroxide ions need to be conducted from the cathode to the anode. A porous sheet is conventionally used as a separator as described above. The porous sheet is provided to conduct ions through the electrolyte filled in the pores in the separator. The pores in the separator need to be through holes across the anode and cathode. In this configuration, the generated hydrogen gas and oxygen gas also reach the partner electrode side through the separator. The oxygen gas that reaches the cathode is reduced in the cathode, or reduced by the hydrogen generated by the cathode (reaction equations (3) and (4)).

Reaction equation (3) 1/2O₂ + H₂O + 2e⁻ → 2OH⁻

Reaction equation (4) 1/2O₂ + H₂ → H₂O

When the reaction shown in the equation (3) occurs in the cathode, this reaction decreases the electric current used for generation of hydrogen gas in the cathode and causes loss of energy efficiency. When the reaction shown in the equation (4) occurs, the hydrogen gas generated in the cathode is partially returned to water, which is the starting material, and causes loss of energy efficiency. These reactions are accompanied by generation of a large amount of heat.

The hydrogen gas that reaches the partner electrode (anode) side is oxidized in the anode, or oxidized by the oxygen generated by the anode (reaction equations (5) and (4)).

Reaction equation (5) H₂ + 2OH⁻ → 2H₂O + 2e⁻

When this reaction occurs, the generated hydrogen is returned to water and causes loss of energy efficiency. This reaction is also accompanied by generation of a large amount of heat.

The hydrogen gas and oxygen gas passing through the separator as described above consume part of the supplied energy and convert the energy to heat only and cause a huge energy loss. This energy loss also causes difficulty in controlling the temperature of the overall electrolytic cell. If the oxygen gas that reaches the cathode side is not subjected to reduction as shown in the reaction equations (3) and (4), the oxygen gas coexists with the hydrogen gas at the cathode side and decreases the purity of the hydrogen gas. In this type of electrolytic hydrogen generator in which ions are conducted through the pores in the separator, the generated gas is also transferred through the membrane pores, causing the problems as described above. Such problems due to the transfer of products will occur not only in hydrogen producing devices but also in electrolytic devices in general.

The distance between the anode and cathode of electrolytic devices, including hydrogen generators, is ideally as short as possible. If this distance is long, resistance due to ion conduction will be high and cause energy loss, and thus the separator is desirably thin as much as possible. However, when the separator that separates the electrodes is excessively thin, the anode and cathode may be in contact with each other and tend to cause a short circuit. The electrodes are ideally made of a material with a large surface area, such as a powder, whiskers and fibers, to achieve high performance. However, when the separator is a porous sheet, the separator may have a high risk of penetration by the electrodes and is difficult to make thin. Such a separator made of a thin porous sheet may also easily tear and may be difficult to maintain its strength.

Several problems may occur when a porous sheet is used as a separator for batteries.

Nickel-zinc batteries, among other batteries using an aqueous alkaline electrolyte, are rechargeable secondary batteries with a positive electrode made of nickel hydroxide or nickel oxyhydroxide and a negative electrode made of zinc oxide or metallic zinc. At the time of charge and discharge, reactions as shown in the following reaction equations (7) and (8) occur in the negative zinc electrode.

Reaction equation (7) [charge] ZnO + H₂O + 2e⁻ → Zn + 2OH⁻

Reaction equation (8) [discharge] Zn + 2OH⁻ -> ZnO + H₂O + 2e⁻

Zinc in the oxidation state formed in the negative zinc electrode at the time of discharge forms a zincate ion (Zn(OH)₄²⁻) and is easily dissolved in the alkaline electrolyte. In other words, the charge and discharge reactions of the zinc electrode occur as a dissolving and depositing reaction. When the separator is a porous material, zinc metal dendrites formed in the negative electrode penetrate the separator and cause a short circuit. Such dendrite formation compromises the durability of batteries.

Zinc-air batteries use air (oxygen) as a positive active material instead of nickel hydroxide or nickel oxyhydroxide used in nickel-zinc batteries. When the separator between the electrodes is made of a porous sheet as in conventional batteries, oxygen taken in from the positive electrode side penetrates through the separator and reaches the negative zinc electrode, in the same manner as in electrolytic devices as described above. Oxygen reaching the negative zinc electrode oxidizes zinc, i.e., discharge occurs. Zinc-air batteries thus always have a large amount of self-discharge. Due to this characteristic, zinc-air batteries are currently used only for hearing aids among others, which constantly operate by continuously consuming oxygen in the positive electrode.

Alkaline fuel cells use the reverse reaction of electrolysis employed in electrolytic hydrogen generators as described above. Alkaline fuel cells generate electricity by supplying hydrogen to the negative electrode and air (oxygen) to the positive electrode. When the separator is a porous sheet, the same problems relating to penetration of gas through the separator arise. That is, when hydrogen gas and oxygen gas penetrate through the separator and reach the partner electrode side, energy loss will occur. The fuel supplied to the negative electrode of a fuel cell is not limited to hydrogen. However, regardless of the type of fuel, when the separator is a porous material and the fuel is a fluid, the same problems relating to penetration of gas through the separator will occur.

To solve the above problems, a separator is required to have the following characteristics: absorbs an electrolyte, conducts necessary ions, and prevents penetration of detrimental substances, such as hydrogen gas, oxygen gas, zinc dendrites or zincate ions, which are the cause of the formation of zinc dendrites. To realize these characteristics, the separator is desirably not a conventional porous sheet that has a macropores but a non-porous material that has no macropores but absorbs an electrolyte.

Semipermeable cellulose membranes, such as cellophane, can serve as such a membrane with the functions as described above, but lack alkali resistance and cannot be used for applications using an alkaline electrolyte. Polymer electrolyte membranes such as Nafion (trade name) can also be used as the membrane and have alkali resistance, but these materials are expensive. When burned for disposal, fluorine membranes generate harmful substances and have other disadvantages. In terms of environmental concerns, fluorine membranes are thus not preferred for applications involving use of a large amount of fluorine membranes.

Patent literature 3, 4, 5 and 6 discloses a non-porous membrane that absorbs an alkaline electrolyte and has hydroxide ion conductivity but is less likely to allow the permeation of gas and substances other than hydroxide ions. In particular, the non-porous membrane is a membrane of an inorganic-organic hybrid compound composed of a zirconic acid compound and a polyvinyl alcohol (hereinafter called PVA). The hybrid compound can be prepared by neutralizing a zirconium salt or an oxy-zirconium salt with an alkali in an aqueous solution under the co-existence of PVA. The resulting hybrid compound is then formed into a membrane, and impregnated with an alkali such as sodium hydroxide, sodium silicate or sodium carbonate to yield a membrane with relatively high conductivity of hydroxide ions (Patent literature 3 and 4).

The inventors, however, found that the hybrid compound tends to gel during neutralization with an alkali in the production process, and the resulting hybrid compound is very difficult to be formed into a membrane with good properties.

Patent literature 5 and 6 discloses that a membrane can be produced by heating a solution containing a water-containing solvent, a PVA and a zirconium salt or an oxy-zirconium salt, then removing the solvent to form a membrane, and bringing the membrane into contact with an alkali. This membrane is produced at a low cost, and the membrane exhibits water resistance, heat resistance and a certain degree of alkali resistance due to formation of a hybrid compound by chemical bonding between the polyvinyl alcohol and the zirconium oxide. The membrane is also proposed to be used as a molecular filter as described in Patent literature 7. The permeable molecular size of the membrane can be adjusted, and the membrane can also be modified not to allow the permeation of a product of electrolytic devices, the fuel of a fuel cell or zincate ions in a zinc-carbon cell.

The inventors, however, found that the alkali resistance of the membrane is insufficient. In particular, the inventors found that the membrane has a problem of durability because the membrane deteriorates in an alkaline aqueous solution due to swelling of the hybrid compound and dissolution of the zirconium oxide component. Especially when the membrane is heated at about 80°C in an alkaline electrolyte during use as in an electrolytic hydrogen generator, large swelling of the membrane and reduction of the strength occur and result in insufficient heat and alkali resistance.

In the methods disclosed in Patent literature 5 and 6, an aqueous PVA solution containing a zirconium salt and other ingredients is heated and dried to form a membrane, and the membrane is then made contact with an alkali.

The aqueous PVA solution containing a zirconium salt and other ingredients is, however, acidic, which means that apparatus is required to have acid resistance for the heating step under acid environment and the cost associated with such apparatus is high.

This heating step under acid environment can be omitted by adding an alkali to the aqueous PVA solution to neutralize the zirconium salt or the oxy-zirconium salt before heating and drying the solution to form a membrane. However, when an alkali is added to the aqueous solution to neutralize the salts, gelation occurs immediately after the addition of the alkali as described above, and a membrane with good properties cannot be obtained as described above.

The inventors found that a membrane formed of a composition containing a combination of a hydrophobic resin with an inorganic-organic hybrid compound comprising a polyvinyl alcohol-based resin to which a metal oxide is chemically bonded has excellent alkali resistance, in particular, heat and alkali resistance, and other advantages. The inventors made further extensive studies and completed the present invention.

Thus, the present invention relates to the following and others.
[1] A composition comprising an inorganic-organic hybrid compound and a hydrophobic resin (or a resin A), wherein the inorganic-organic hybrid compound comprises a polyvinyl alcohol-based resin to which a metal oxide is chemically bonded (or to which a metal in an oxide form is bonded).
[2] The composition according to the above [1], further comprising a metal oxide powder.
[3] The composition according to the above [1] or [2], wherein a 4 mass% aqueous solution of the polyvinyl alcohol-based resin has a viscosity of 5 mPa·s or more at 20°C.
[4] The composition according to any one of the above [1] to [3], wherein a 4 mass% aqueous solution of the polyvinyl alcohol-based resin has a viscosity of 10 mPa·s or more at 20°C.
[5] The composition according to any one of the above [1] to [4], wherein a 4 mass% aqueous solution of the polyvinyl alcohol-based resin has a viscosity of 15 mPa·s or more at 20°C, and the polyvinyl alcohol-based resin has a degree of saponification of 85 mol% or more.
[6] The composition according to any one of the above [1] to [5], wherein the metal oxide comprises at least one selected from zirconium oxide and titanium oxide (e.g., comprises at least zirconium oxide).
[7] The composition according to any one of the above [1] to [6], wherein the hydrophobic resin (or the resin A) has an SP value of 13 (cal/cm³)^{1/2} or less.
[8] The composition according to any one of the above [1] to [7], wherein the hydrophobic resin (or the resin A) comprises at least one selected from a polyolefin resin and a polyvinyl chloride resin.
[9] The composition according to any one of the above [2] to [8], wherein the metal oxide powder comprises at least one selected from a zirconium oxide powder and a titanium oxide powder (e.g., comprises at least a zirconium oxide powder).
[10] The composition according to any one of the above [1] to [9], wherein the hydrophobic resin (or the resin A or the polyolefin resin) comprises a polyolefin resin, for example, a polypropylene resin such as polypropylene and/or a polyethylene resin such as polyethylene.
[11] The composition according to any one of the above [1] to [10], wherein the hydrophobic resin is contained in an amount of 0.3 parts by mass or more relative to 1 part by mass of the polyvinyl alcohol-based resin.
[12] The composition according to any one of the above [2] to [11], wherein the zirconium oxide powder is contained in an amount of from 0.7 parts by mass to 3.5 parts by mass relative to 1 part by mass of the polyvinyl alcohol-based resin.
[13] The composition according to any one of the above [1] to [12], wherein the composition is for formation of a membrane (e.g., a separator for an electrolytic device or a battery using an alkaline electrolyte).
[14] The composition according to any one of the above [1] to [13], wherein the composition is for formation of a membrane in which the inorganic-organic hybrid compound and the hydrophobic resin are present independently of each other (or wherein the inorganic-organic hybrid compound and the hydrophobic resin (or the resin A) are present independently of each other).
[15] A membrane formed of the composition according to any one of the above [1] to [14].
[16] The membrane according to the above [15], wherein the membrane is for a separator of an electrolytic device or a battery.
[17] The membrane according to the above [15] or [16], wherein the inorganic-organic hybrid compound and the hydrophobic resin (or the resin A) are present independently of each other.
[18] The membrane according to any one of the above [15] to [17], further comprising a pored or porous membrane support.
[19] The membrane according to the above [18], wherein the membrane support comprises a polypropylene sheet or a polyethylene sheet.
[20] The membrane according to any one of the above [16] to [19], wherein the electrolytic device or the battery uses an alkaline electrolyte.
[21] The membrane according to any one of the above [16] to [20], wherein the electrolytic device is an electrolytic hydrogen generator, an ammonia generator, or a carbonate reduction device.
[22] The membrane according to any one of the above [15] to [21], wherein the membrane has a thickness of 300 µm or less.
[23] The membrane according to any one of the above [16] to [22], wherein the battery is a nickel-zinc battery, a manganese-zinc battery, a zinc-air battery, an iron-air battery or a fuel cell.
[24] The membrane according to any one of the above [15] to [23], wherein the membrane has a thickness of 100 µm or less.
[25] The membrane according to any one of the above [15] to [24], wherein the membrane is for an electrolytic device or a battery having a configuration in which an electrode is in contact with a separator.
[26] An electrolytic device or a battery using (or comprising) the membrane according to any one of the above [15] to [25].
[27] A method for producing a membrane, the method comprising forming a membrane using the composition according to any one of the above [1] to [14] (or forming the composition in a form of a membrane).
[28] A method for producing an inorganic-organic hybrid compound comprising a polyvinyl alcohol-based resin to which a metal oxide is chemically bonded, the method comprising adding an alkali to an aqueous solution containing a compound (A) having two or more hydroxyl groups in its molecule and having a molecular weight of 350 g/mol or less, a salt corresponding to a metal oxide (e.g., a metal salt or an oxy-metal salt), and a polyvinyl alcohol-based resin.
[29] The production method according to the above [28], wherein the compound (A) is contained in an amount of from 0.5 parts by mass to 6 parts by mass relative to 1 part by mass of the polyvinyl alcohol-based resin in the aqueous solution.
[30] The production method according to the above [28] or [29], wherein the compound (A) is at least one selected from glycerin, diethylene glycol, a monosaccharide and a disaccharide.
[31] The production method according to any one of the above [28] to [30], wherein the compound (A) comprises glycerin.
[32] A method for producing a composition comprising an inorganic-organic hybrid compound comprising a polyvinyl alcohol-based resin to which a metal oxide is chemically bonded, or for producing a membrane formed of the composition (the composition or the membrane according to any one of the above [1] to [25]), the method comprising the production method or the step or steps according to any one of the above [28] to [31].
[33] The production method of the above [32], further comprising adding a hydrophobic resin (or blending a hydrophobic resin to the inorganic-organic hybrid compound).
[34] The production method according to the above [33], wherein the hydrophobic resin is in a form of an aqueous dispersion (for example, an aqueous dispersion of a polyolefin resin) (or the method further comprises blending the hydrophobic resin or a resin A, e.g., a polyolefin resin, in a form of an aqueous dispersion).
[35] The production method according to the above [34], wherein the hydrophobic resin (e.g., the polyolefin resin, or the polyolefin resin constituting the aqueous dispersion, or the resin A, e.g., a polyolefin resin, constituting the aqueous dispersion) is an acid-modified hydrophobic resin (a polyolefin resin, e.g., a hydrophobic resin modified with maleic acid on its particle surface).

### ADVANTAGEOUS EFFECTS OF INVENTION

The present invention provides a novel composition, in particular, a composition comprising an inorganic-organic hybrid compound.

In an embodiment of the composition of the present invention, a membrane with excellent alkali resistance, in particular, excellent heat and alkali resistance, is provided.

In an embodiment of the present invention, a membrane is provided at low cost.

In an embodiment of the present invention, a membrane with excellent hydroxide ion conductivity is provided.

In an embodiment of the present invention, a non-porous membrane (having no macropores) is provided.

Such a membrane is capable of preventing the permeation of gas and substances other than ions that need to permeate. The membrane can solve the conventional problems as described above relating to separators for electrolytic devices or batteries using an aqueous alkaline electrolyte.

The membrane is non-porous, and therefore can be made thin, which allows for miniaturization of a device or battery.

In an embodiment of the present invention, a novel method for producing an inorganic-organic hybrid compound is provided.

In an embodiment of the present invention, a novel method for producing a membrane is provided, in particular, a method for producing a membrane formed of a composition containing an inorganic-organic hybrid compound is provided.

In an embodiment of the present invention, a method for producing a membrane formed of a composition containing an inorganic-organic hybrid compound is provided, wherein a heating step under acidic conditions is unnecessary.

With this production method, apparatus with excellent acid resistance is unnecessary, which enables cost reduction of the production apparatus.

In conventional methods for producing a membrane using an inorganic-organic hybrid compound, an aqueous PVA solution is heated under acidic conditions, and therefore there are problems of tendency to deterioration of PVA, in particular, degradation due to progress of intramolecular dehydration. In contrast, the method for producing a membrane according to the invention does not require a heating step of an aqueous PVA solution under acidic conditions, and easily prevents degradation of PVA during the production process.

The membrane (or the separator) according to an embodiment of the present invention is capable of efficiently preventing the permeation of gas generated by electrolysis and other products as compared with conventional porous sheets. The membrane of the invention is capable of increasing energy efficiency and the purity of the products.

### BRIEF DESCRIPTION OF DRAWINGS

Fig.1 schematically shows representative steps for producing a membrane of the invention.
Fig.2 shows a schematic view of an electrolytic device of Example 13.
Fig.3 shows the relation between the electric current density and the voltage in electrolytic hydrogen production tests in Examples 13 to 15.
Fig.4 shows a nickel-zinc battery using a separator of the invention (Example 17). a. membrane, b. nonwoven porous sheet, c. negative electrode, d. positive electrode, e. Teflon vessel, f. stainless steel vessel, and g. electrolyte.
Fig.5 shows a charge and discharge voltage curve of the nickel-zinc battery using the separator of the invention (Example 17).
Fig.6 shows a field emission scanning electron microscopic image of the membrane of Example 18.

### DESCRIPTION OF EMBODIMENTS

### Composition

The composition of the invention comprises an inorganic-organic hybrid compound and a hydrophobic resin (or a resin A; hereinafter, the hydrophobic resin and the resin A may be collectively called the "hydrophobic resin", the "resin A", etc.), wherein the inorganic-organic hybrid compound comprises a polyvinyl alcohol-based resin to which a metal oxide is chemically bonded.

In the inorganic-organic hybrid compound, the metal bonded to the polyvinyl alcohol-based resin may be in an oxide form.

### Polyvinyl alcohol-based resin

The polyvinyl alcohol-based resin (hereinafter, simply may be called the "PVA-based resin") may typically be a saponified product of a polymer containing at least a vinyl ester monomer as a polymerization component. Such a polyvinyl alcohol-based resin may be any polyvinyl alcohol-based resin containing vinyl alcohol units, and may contain structural units derived from a vinyl ester monomer or other structural units derived from other unsaturated monomers.

Examples of the vinyl ester monomer used in the production of the polyvinyl alcohol-based resin include a fatty acid vinyl ester.

The fatty acid vinyl ester is not particularly limited, and may be, for example, vinyl formate, vinyl acetate, vinyl propionate, vinyl pivalate, etc. In particular, vinyl acetate is industrially preferred.

The polymerization of vinyl ester monomers can be performed by conventionally known bulk polymerization, solution polymerization, suspension polymerization, emulsion polymerization, etc., and solution polymerization using an alcohol solvent such as methanol, etc. is industrially preferred.

In the polymerization of vinyl ester monomers, a copolymerizable additional unsaturated monomer may be used to the extent that the copolymerizable additional unsaturated monomer does not impair the effects of the invention.

The additional unsaturated monomer may be one or more unsaturated monomers selected from carboxyl group-containing unsaturated monomers, such as (meth)acrylic acid, maleic acid, maleic anhydride, fumaric acid, crotonic acid, itaconic acid, and undecylenic acid; unsaturated dibasic acid monoalkyl esters, such as monomethyl maleate and monomethyl itaconate; amide group-containing unsaturated monomers, such as acrylamide, dimethylacrylamide, dimethylaminoethylacrylamide, diethylacrylamide, dimethylaminopropylacrylamide, isopropylacrylamide, N-methylolacrylamide, N-vinylformamide, and N-vinylacetamide; vinyl halides, such as vinyl chloride and vinyl fluoride; glycidyl group-containing unsaturated monomers, such as allyl glycidyl ether and glycidyl methacrylate; lactam group-containing unsaturated monomers including, e.g., N-vinylpyrrolidones such as N-vinyl-2-pyrrolidone and N-vinyl-alkylpyrrolidone (e.g., N-vinyl-mono- or di-C₁₋₄ alkyl-pyrrolidones, such as N-vinyl-3-propyl-2-pyrrolidone, N-vinyl-5-methyl-2-pyrrolidone, N-vinyl-5-ethyl-2-pyrrolidone, N-vinyl-5,5-dimethyl-2-pyrrolidone, and N-vinyl-3,5-dimethyl-2-pyrrolidone), N-allylpyrrolidones such as N-allyl-2-pyrrolidone, N-vinylpiperidones such as N-vinyl-2-piperidone and N-vinyl-alkylpiperidone (e.g., N-vinyl-mono- or di-C₁₋₄ alkyl-piperidones, such as N-vinyl-6-methyl-2-piperidone and N-vinyl-6-ethyl-2-piperidone), and N-vinylcaprolactams such as N-vinyl-ε-caprolactam and N-vinyl-alkylcaprolactam (e.g., N-vinyl-mono- or di-C₁₋₄ alkyl-caprolactams, such as N-vinyl-7-methyl-2-caprolactam and N-vinyl-7-ethyl-2-caprolactam); alkyl vinyl ethers such as C₁₋₂₀ alkyl vinyl ethers (e.g., methyl vinyl ether, n-propyl vinyl ether, i-propyl vinyl ether, n-butyl vinyl ether, i-butyl vinyl ether, t-butyl vinyl ether, lauryl vinyl ether, dodecyl vinyl ether, and stearyl vinyl ether); nitriles such as acrylonitrile and methacrylonitrile; hydroxyl group-containing unsaturated monomers, including, e.g., C₁₋₂₀ monoalkyl allyl alcohols such as allyl alcohol and isopropenyl allyl alcohol, C₁₋₂₀ dialkyl allyl alcohols such as dimethyl allyl alcohol, and hydroxy C₁₋₂₀ alkyl vinyl ethers such as hydroxy ethyl vinyl ether and hydroxy butyl vinyl ether; acetyl group-containing unsaturated monomers, including, e.g., C₁₋₂₀ alkyl allyl acetates such as allyl acetate, dimethylallyl acetate, and isopropenylallyl acetate; (meth)acrylic acid esters, including, e.g., (meth)acrylic acid alkyl esters, such as (meth)acrylic acid C₁₋₂₀ alkyl esters such as methyl (meth)acrylate, ethyl (meth)acrylate, 2-ethylhexyl acrylate, and n-butyl acrylate; vinylsilanes such as trimethoxyvinylsilane, tributylvinylsilane, and diphenylmethylvinylsilane; polyoxyalkylene (meth)acrylates, such as polyoxyethylene (meth)acrylate and polyoxypropylene (meth)acrylate; polyoxyalkylene (meth)acrylamides, such as polyoxyethylene (meth)acrylamide and polyoxypropylene (meth)acrylamide; polyoxyalkylene vinyl ethers, such as polyoxyethylene vinyl ether and polyoxypropylene vinyl ether; polyoxyalkylene alkylvinyl ethers, such as polyoxyethylene allyl ether, polyoxypropylene allyl ether, polyoxyethylene butylvinyl ether, and polyoxypropylene butylvinyl ether; α-olefins such as ethylene, propylene, n-butene, and 1-hexene; butenes such as 3,4-dihydroxy-1-butene, 3,4-diacyloxy-1-butene, 3-acyloxy-4-hydroxy-1-butene, 4-acyloxy-3-hydroxy-1-butene, and 3,4-diacyloxy-2-methyl-1-butene; pentenes such as 4,5-dihydroxy-1-pentene, 4,5-diacyloxy-1-pentene, 4,5-dihydroxy-3-methyl-1-pentene, and 4,5-diacyloxy-3-methyl-1-pentene; hexenes such as 5,6-dihydroxy-1-hexene and 5,6-diacyloxy-1-hexene; unsaturated amine monomers, such as N,N-dimethylallylamine, N-allylpiperazine, 3-piperidine acrylic acid ethyl ester, 2-vinylpyridine, 4-vinylpyridine, 2-methyl-6-vinylpyridine, 5-ethyl-2-vinylpyridine, 5-butenylpyridine, 4-pentenylpyridine, and 2-(4-pyridyl)allyl alcohol; quaternary ammonium compound-containing unsaturated monomers, such as dimethylaminoethyl acrylate methyl chloride quaternary salt, N,N-dimethylaminopropyl acrylamide methyl chloride quaternary salt, and N,N-dimethylaminopropyl acrylamide methyl benzenesulfonate quaternary salt; aromatic unsaturated monomers such as styrene; sulfonic acid group-containing unsaturated monomers, such as 2-acrylamide-2-methylpropanesulfonic acid or its alkali metal salts, ammonium salts or organic amine salts, 2-acrylamide-1-methylpropanesulfonic acid or its alkali metal salts, ammonium salts or organic amine salts, 2-methacrylamide-2-methylpropanesulfonic acid or its alkali metal salts, ammonium salts or organic amine salts, vinyl sulfonic acid or its alkali metal salts, ammonium salts or organic amine salts, allyl sulfonic acid or its alkali metal salts, ammonium salts or organic amine salts, and methallyl sulfonic acid or its alkali metal salts, ammonium salts or organic amine salts; diacetone acrylamide, diacetone methacrylamide, diacetone acrylate, diacetone methacrylate, acetoacetoxy acrylamide, acetoacetoxy methacrylamide; glycerol monoallyl ether; 1,3-diacetoxy-2-methylenepropane; 2,3-diacetoxy-1-allyloxypropane; 2-acetoxy-1-allyloxy-3-hydroxypropane; 3-acetoxy-1-allyloxy-3-hydroxypropane; 3-acetoxy-1-allyloxy-2-hydroxypropane; 3,4-diacetoxy-1-butene; glycerol monovinyl ether; glycerol monoisopropenyl ether; acryloyl morpholine; vinyl ethylene carbonate; vinylimidazole; and vinylcarbazole.

The amount of the additional unsaturated monomer may be, for example, but is not limited to, 20 mol or less, 15 mol or less, 10 mol or less, etc. relative to 100 mol of the vinyl ester monomers.

The produced polyvinyl alcohol-based resin may be post-modified by acetalization, urethanation, etherification, grafting, phosphorylation, sulfonation, acetoacetylation, cationization, amination, hydrazidation, or other reactions in accordance with a known method to the extent that the effects of the present invention are not impaired.

The polymerization catalyst used in polymerizing the vinyl ester monomers is typically, but not limited to, an azo compound or a peroxide.

An organic acid, such as tartaric acid, citric acid, and acetic acid, may be added to the polymerization reaction to prevent the hydrolysis of the fatty acid vinyl ester.

A polymerization terminator may be used to terminate the polymerization. The polymerization terminator may be, for example, but is not limited to, m-dinitrobenzene, etc.

The shape of a polymerization vessel, the type of a polymerization agitator, the polymerization temperature, the pressure in the polymerization vessel, or other conditions may also be in accordance with a conventionally known method.

For adjustment of the degree of polymerization, a chain transfer agent such as 2-mercaptoethanol, 1-dodecanethiol and acetaldehyde may be used.

The resulting polymer may be saponified by any conventionally known method. For example, a conventionally known alcoholysis or hydrolysis is applicable using a basic catalyst, such as sodium hydroxide, potassium hydroxide or sodium methoxide, or an acidic catalyst, such as hydrochloric acid, sulfuric acid or p-toluenesulfonic acid.

The solvent used in the saponification reaction may be, for example, an alcohol such as methanol or ethanol; an ester such as methyl acetate; a ketone such as acetone or methyl ethyl ketone; an aromatic hydrocarbon such as benzene or toluene; tetrahydrofuran; etc. These solvents may be used alone or in combination of two or more. The temperature, duration, and other conditions of the saponification reaction are not particularly limited.

The drying, grinding or washing of the saponified product may be done by any methods and may be performed by a conventionally known method.

The viscosity of a 4 mass% aqueous solution of the polyvinyl alcohol-based resin (at 20°C) may be, for example, but not limited to, 1 mPa·s or more, 2 mPa·s or more, 3 mPa·s or more, 7 mPa·s or more, 10 mPa·s or more, 20 mPa·s or more, or 30 mPa·s or more, and 3000 mPa·s or less, 2000 mPa.s or less, 1000 mPa.s or less, 800 mPa.s or less, 500 mPa·s or less, 200 mPa·s or less, 150 mPa·s or less, 100 mPa·s or less, or 90 mPa·s or less.

Typically, the viscosity of a 4 mass% aqueous solution of the polyvinyl alcohol-based resin (at 20°C) may suitably be about 3 mPa·s or more (e.g., 5 mPa·s or more, 8 mPa·s or more, 10 mPa·s or more, 12 mPa·s or more, 15 mPa·s or more, 18 mPa·s or more, 20 mPa·s or more, 22 mPa·s or more, 25 mPa·s or more, or 20 to 500 mPa·s), and the viscosity of a 4 mass% aqueous solution of the polyvinyl alcohol-based resin (at 20°C) may suitably be about 2000 mPa·s or less (e.g., 1500 mPa·s or less, 1400 mPa·s or less, 1200 mPa.s or less, 1000 mPa.s or less, 800 mPa.s or less, 700 mPa.s or less, 600 mPa.s or less, 500 mPa·s or less, 400 mPa·s or less, 300 mPa·s or less, or 200 mPa·s or less) to achieve alkali resistance, in particular, alkali resistance of a membrane formed of the composition and ion permeability of the membrane as well as the balance of these properties, etc.

The viscosity of a 4 mass% aqueous solution of the polyvinyl alcohol-based resin (at 20°C) is preferably, for example, about 5 to 3000 mPa·s, more preferably about 10 to 2500 mPa·s (e.g., 20 to 2500 mPa·s), and even more preferably about 10 to 1500 mPa·s (e.g., 15 to 1500 mPa·s, 12 to 1000 mPa·s, 20 to 1500 mPa·s, 40 to 1500 mPa·s, or 30 to 800 mPa·s, etc.) to achieve alkali resistance, in particular, alkali resistance of a membrane formed of the composition and ion permeability of the membrane as well as the balance of these properties, etc.

The viscosity of a 4 mass% aqueous solution of the polyvinyl alcohol-based resin (the viscosity of a 4 mass% aqueous solution at 20°C) can be measured, for example, in accordance with JIS K 6726.

The polyvinyl alcohol-based resin used in the invention can be selected in terms of its type, composition, etc., and may be, but is not limited to, a completely saponified polyvinyl alcohol-based resin (e.g., having a degree of saponification of 97 mol% or more), or a partially saponified polyvinyl alcohol-based resin (e.g., having a degree of saponification of less than 97 mol%).

The degree of saponification of the polyvinyl alcohol-based resin is preferably 70 mol% or more (e.g., 70 to 100 mol%, or 70 to 99.9 mol%), 75 mol% or more (e.g., 78 to 99.9 mol%), 80 mol% or more (e.g., 80 to 99.9 mol%), 82 mol% or more, 85 mol% or more, 86 mol% or more (e.g., 86 to 99.9 mol%), 90 mol or more (e.g., 90 to 99.9 mol%), or 95 mol% or more (e.g., 95 to 99.9 mol%) to achieve water solubility, good handling, and alkali resistance, in particular, alkali resistance of a membrane formed of the composition, and ion permeability of the membrane, etc.

The (average) degree of saponification may be measured in accordance with, for example, JIS K 6726.

The polyvinyl alcohol-based resin may be a single type or a combination of two or more types.

### Metal oxide

The metal oxide bonded to the polyvinyl alcohol-based resin is, for example, an oxide of a main group metal, such as a group 13 element (e.g., aluminum, etc.) or an oxide of a transition metal, such as a group 4 element (e.g., titanium, zirconium, etc.). Preferred are zirconium oxide and titanium oxide, and more preferred is zirconium oxide.

The metal oxide may be a metal oxide as it is, or a hydrate of a metal oxide, a derivative of a metal oxide, or a compound derived from a metal oxide (e.g., a salt of a metal oxide). The metal oxide may be substituted with another element.

For example, zirconium oxide is a compound derived from the basic unit ZrO₂, and includes, for example, a zirconate compound containing water represented by the general formula ZrO₂·xH₂O (x is an integer of 1 or more), and other derivatives of ZrO₂. In other words, zirconium oxide generally refers to a compound based on ZrO₂ (including, e.g., a salt of zirconic acid, zirconium hydroxide, etc.). Zirconium oxide may be substituted with another element to the extent that the characteristics of ZrO₂ are not impaired. The deviation from the stoichiometric composition is acceptable, and an additive may be added. For example, salts of zirconic acid and hydroxides of zirconium are also derived from the basic unit ZrO₂, and zirconium oxide according to the invention also includes salt derivatives and hydroxide derivatives, as well as compounds based on salt derivatives and hydroxide derivatives.

The metal oxide may be a single type or a combination of two or more types.

### Inorganic-organic hybrid compound

The inorganic-organic hybrid compound is formed by bonding (chemical bonding) by dehydration condensation of a metal oxide and a hydroxyl group of a PVA-based resin. In other words, the inorganic-organic hybrid compound contains a PVA-based resin to which a metal oxide (or a metal) is bonded, in particular, a metal oxide (or a metal) is bonded to an oxygen atom of a hydroxyl group of a PVA-based resin. In the inorganic-organic hybrid compound, the metal oxide (or the metal) is bonded to at least some of oxygen atoms of hydroxyl groups of the PVA-based resin.

The term "hybrid compound" as used herein refers to a compound distinguished from a physical mixture of polyvinyl alcohol and zirconium oxide or other metals. That is, unlike a mixture, in a hybrid compound, the chemical properties of the components are not necessarily maintained after hybridization. For example, the polyvinyl alcohol serving as a component of the hybrid compound of the invention is water-soluble (in hot water) by itself, but basically does not dissolve in hot water after formed into a hybrid compound together with zirconium oxide or other metals. Heat resistance and oxidation resistance of the polyvinyl alcohol will be improved by hybridization together with zirconium oxide or other metals which has significantly excellent heat resistance and oxidation resistance, as compared with heat resistance and oxidation resistance of the polyvinyl alcohol alone.

The amount of the metal oxide contained in the inorganic-organic hybrid compound is, for example, 0.001 to 10 parts by mass, and preferably 0.01 to 1 part by mass relative to 1 part by mass of the PVA-based resin to achieve water resistance, heat resistance, oxidation resistance, strength, flexibility, hydroxide ion permeability, etc.

For example, when zirconium oxide or other metals are bonded to the PVA-based resin in the inorganic-organic hybrid compound, the amount of zirconium oxide or other metals in the inorganic-organic hybrid compound is preferably controlled so that ZrO₂ etc. contained in the inorganic-organic hybrid compound is 0.01 parts by mass or more (e.g., 0.05 parts by mass or more) relative to 1 part by mass of the PVA-based resin to achieve the water resistance, heat resistance, oxidation resistance and strength of the membrane and to prevent the permeation of substances that should not be permeated. The amount of zirconium oxide or other metals in the inorganic-organic hybrid compound is preferably controlled so that ZrO₂ etc. contained in the inorganic-organic hybrid compound is 1 part by mass or less (e.g., 0.8 parts by mass or less) to achieve the flexibility, hydroxide ion conductivity, etc. of the membrane.

### Method for producing inorganic-organic hybrid compound

The inorganic-organic hybrid compound can be produced by, for example, adding an alkali to an aqueous solution containing a water soluble compound having a hydroxyl group, a salt corresponding to a metal oxide (e.g., a metal salt or an oxy-metal salt), and a polyvinyl alcohol-based resin; or can be produced by a production method including such addition. That is, the present invention also includes a method for producing an inorganic-organic hybrid compound comprising a polyvinyl alcohol-based resin to which a metal oxide is chemically bonded, the method including such an adding step.

After the addition of an alkali to the aqueous solution, the salt corresponding to a metal oxide is converted into a metal oxide, and the metal oxide is then bonded to a hydroxyl group of the PVA-based resin to yield an inorganic-organic hybrid compound.

The salt corresponding to a metal oxide may be any salt capable of forming a metal oxide of interest, and includes, for example, inorganic salts, organic salts, metal salts, or oxy metal salts (e.g., chloride salts, nitrate salts, sulfate salts, acetate salts, etc.), etc.

For example, for formation of zirconium oxide, the salt corresponding to a metal oxide that can be used are a zirconium salt, oxy-zirconium salt, etc.

Examples of the alkali include, but are not limited to, sodium hydroxide, potassium hydroxide, lithium hydroxide, and ammonia.

The water soluble compound having a hydroxyl group may have one or two or more hydroxyl groups.

Examples of the water soluble compound having a hydroxyl group include polyhydric alcohols (e.g., glycerin, diglycerin, polyglycerin, diethylene glycol, polyethylene glycol, etc.); low molecular weight polyvinyl alcohols; sugars (e.g., monosaccharides such as glucose, or disaccharides such as sucrose) and derivatives thereof; sugar alcohols (e.g., xylitol, sorbitol, maltitol, etc.) and derivatives thereof; polyoxyalkylene polyglyceryl ethers (e.g., polyoxyethylene polyglyceryl ethers, polyoxypropylene polyglyceryl ethers, etc.); and polyoxyalkylene glyceryl ethers (e.g., polyoxyethylene glyceryl ethers, polyoxypropylene glyceryl ethers, polyoxyethylene diglyceryl ethers, and polyoxypropylene diglyceryl ethers, etc.).

The water soluble compound having a hydroxyl group may have a relatively low molecular weight, and the molecular weight of the water soluble compound having a hydroxyl group is, for example, 350 g/mol or less.

Exemplary examples of the water soluble compound having a hydroxyl group include a compound (A) having two or more hydroxyl groups in its molecule and having a molecular weight of 350 g/mol or less.

Examples of the compound (A) include polyhydric alcohols having a molecular weight of 350 g/mol or less (e.g., glycerin, diglycerin, a low molecular weight polyglycerin having a molecular weight of 350 g/mol or less, diethylene glycol, a low molecular weight polyethylene glycol having a molecular weight of 350 g/mol or less, etc.); a low molecular weight polyvinyl alcohol having a molecular weight of 350 g/mol or less; sugars (e.g., monosaccharides such as glucose, or disaccharides such as sucrose) and derivatives thereof; sugar alcohols (e.g., xylitol, sorbitol, maltitol, etc.) and derivatives thereof; polyoxyalkylene polyglyceryl ethers having a molecular weight of 350 g/mol or less; and polyoxyalkylene glyceryl ethers having a molecular weight of 350 g/mol or less.

The water soluble compound having a hydroxyl group, such as compound (A), may be a single type or a combination of two or more types.

The aqueous solution obtained by the step as described above has a pH of, for example, 8 to 14.

The method for producing the inorganic-organic hybrid compound will be described in detail in steps 1 and 2 of the method for producing a membrane as described later. In other words, the method for producing the inorganic-organic hybrid compound may be performed by the method described in the steps 1 and 2 as described later.

### Hydrophobic resin or resin A

The resin A may be, but is not limited to, a hydrophobic resin.

The hydrophobic resin (or the resin A) may have an SP (Solubility Parameter) value of, for example, but not limited to, 5 (cal/cm³)^{1/2} or more, 20 (cal/cm³)^{1/2} or less, 18 (cal/cm³)^{1/2} or less, 15 (cal/cm³)^{1/2} or less, 14 (cal/cm³)^{1/2} or less, or 13 (cal/cm³)^{1/2} or less.

The SP value may be, for example, a SP value at 25°C.

The SP value may be determined by, for example, the Hildebrand method, the Hansen method, the Fedors method (e.g., the method described in R. F. Fedors, Polym, Eng, Sci., 14, 147(1974)), the van Krevelen and Hoftyzer method, a method based on a molar attraction constant [for example, a method in which an SP value is determined by the formula: SP value = ΣG/V, wherein G represents a molar attraction constant of functional groups or atomic groups constituting the resin molecule, and V represents a molar volume (D. A. Small, J. Appl. Chem., 3, 71, (1953); K. L. Hoy, J. Paint to Technol., 42, 76 (1970))] or other methods. The SP values described in literature may be used.

For example, by using the Fedors method, the structural repeating units of the polymer are modeled by the monomer model of J-OCTA (JSOL Corporation), then the solubility parameters (SP value) according to the Fedors method is calculated by the physical property estimation functions of the software, and the SP value is converted to a different unit by the conversion formula: SP value [(cal/cm³)^{1/2}] = SP value [(J/cm³)^{1/2}]/2.05). The SP value determined by the Fedors method are, for example, as follows: the SP value of an ethylene homopolymer is 8.55 (cal/cm³)^{1/2}, the SP value of a propylene homopolymer is 8.18 (cal/cm³)^{1/2}, the SP value of a vinyl chloride homopolymer is 10.32 (cal/cm³)^{1/2}, etc.

The hydrophobic resin (the resin A) may be, for example, a polyolefin resin, a polystyrene resin, a halogen-containing resin (for example, a copolymer containing a polyvinyl chloride resin, for example, a copolymer of polyvinyl chloride or vinyl chloride and another monomer (e.g., an acrylic monomer, etc.)), or a polysulfone resin. Preferred is a polyolefin resin (e.g., polypropylene, polyethylene, etc.), a polyvinyl chloride resin, etc., and a polyolefin resin can be suitable. These hydrophobic resins can be used alone or in combination of two or more types.

The hydrophobic resin (the resin A) may be a modified resin (e.g., an acid-modified hydrophobic resin, etc.). Examples of the acid-modified resin (the acid-modified hydrophobic resin, etc.) include resins (hydrophobic resins, etc.) modified with an acid (e.g., maleic acid, etc.) on their particle surface.

For example, the polyolefin resin may be a polyolefin resin having a substituent, a polyolefin resin copolymerized with units derived from a monomer other than an olefin, and a polyolefin resin modified with other compounds on its surface.

For example, the polyolefin resin may be polyethylene, which has a melting point of less than 140°C. The composition of the invention, even when the composition contains polyethylene, can be formed into a membrane at 140°C, and the membrane does not easily melt and maintains its shape.

The hydrophobic resin (the resin A) may be in the form of a dispersion in a solvent (e.g., an aqueous dispersion, a water-based dispersion, etc.).

The inorganic-organic hybrid compound as described above is highly hydrophilic, and absorbs water and also absorbs an aqueous alkaline electrolyte. Thus, a membrane formed of the inorganic-organic hybrid compound has hydroxide ion permeability even when the membrane is non-porous. Polyvinyl alcohol serving as a component of the membrane is less likely to permeate gas, and when the polyvinyl alcohol is hybridized with zirconium oxide or other metal oxides, which have a higher density than a polyvinyl alcohol, the gas permeability of the membrane will be even lowered. When the polyvinyl alcohol region of the hybrid compound absorbs water, the polyvinyl alcohol region may allow the permeation of dissolved components other than hydroxide ions, but the permeable molecular size of the membrane can be controlled by adjusting the amount (or concentration) of zirconium oxide to be hybridized with the polyvinyl alcohol. Thus, unnecessary components other than gas dissolved in water can also be prevented from permeating through the membrane.

The inorganic-organic hybrid compound absorbs an aqueous alkaline electrolyte and exhibits hydroxide ion conductivity (permeability) as described above. However, this absorption of the alkaline electrolyte causes significant swelling of the hybrid compound and makes the hybrid molecules susceptible to break. As the swelling of the hybrid compound largely proceeds, individual molecules are exposed to the alkali, which promotes decomposition of the hybrid compound by hydrolysis. Typically, sufficiently grown zirconium oxide is less likely to be soluble in an alkali and is stable, but in the hybrid compound, nanoscale-sized zirconium oxide is bonded to the polyvinyl alcohol in the hybrid compound and is in an easily soluble state. When significant swelling of the hybrid compound largely proceeds, the elution of zirconium oxide or other metal oxides also promotes the decomposition of the hybrid compound. Such degradation of the hybrid compound is further promoted in a high temperature alkali environment. For this reason, conventional separators composed only of a hybrid compound have insufficient alkali resistance. Also, membranes formed of a conventional inorganic-organic hybrid compound has low flexibility due to the inorganic components and susceptible to damages.

In contrast, the composition of the invention contains a hydrophobic resin, and thus when the composition is used to produce a membrane, the composition is capable of imparting flexibility to the whole membrane.

The hydrophobic resin helps to prevent swelling of the inorganic-organic hybrid compound, and can efficiently prevent changes in size associated with the swelling of the overall membrane, and can prevent degradation of the inorganic-organic hybrid compound due to its swelling. In other words, the composition of the invention contains a hydrophobic resin, and due to this, the composition of the invention can serve as a composition with excellent alkali resistance and can be used to produce a membrane with excellent alkali resistance.

The amount of the hydrophobic resin (the resin A) contained in the composition is, for example, 0.3 parts by mass or more, preferably 0.4 parts by mass or more, and is, for example, 10 parts by mass or less, 5 parts by mass or less, 3 parts by mass or less, or 1 part by mass or less relative to 1 part by mass of the polyvinyl alcohol-based resin to achieve such effects, etc.

A polyolefin is hydrophobic and does not absorb an alkaline electrolyte, and therefore individual molecules are not exposed to an alkali and is typically stable to an alkali. Oxidation resistance and heat resistance of a polyolefin are not always excellent, but when a polyolefin is blended with the inorganic-organic hybrid compound with excellent oxidation resistance and heat resistance in microscale as described above, insufficient oxidation resistance and heat resistance of polyolefin are not a substantial problem.

### Metal oxide powder

A suitable composition of the invention may contain a metal oxide powder.

The hydrophobic resin, due to its hydrophobicity, helps to prevent swelling of the inorganic-organic hybrid compound in an alkaline electrolyte and prevents the degradation of the inorganic-organic hybrid compound as described above. However, in electrolytic devices, when the surface of a separator has strong water repellency, the generated gas is adsorbed to the surface of the separator and may inhibit electrolysis reaction. Also in batteries, impaired wettability at the interface between the separator and the electrodes may inhibit charge and discharge reactions.

In the composition of the invention, use of a metal oxide powder in addition to the hydrophobic resin efficiently prevents the swelling of the inorganic-organic hybrid compound in an alkaline electrolyte, and is likely to prevent the inhibition of the electrolysis reaction and inhibition of the charge reaction.

The metal oxide powder does not swell and strongly bonds to the inorganic-organic hybrid compound, and due to these properties, the metal oxide easily prevents the swelling of the inorganic-organic hybrid compound under alkaline conditions. The metal oxide powder may reduce water repellency of the surface of a separator due to its high hydrophilicity, and may easily prevent the inhibition of an electrolysis reaction and charge and discharge reactions by the water repellency. When the inorganic-organic hybrid compound is combined with the metal oxide powder only, the resulting separator may be hard and easily damaged, but co-existence of the three components, i.e., the inorganic-organic hybrid compound, the hydrophobic resin such as a polyolefin and the metal oxide powder such as a zirconium oxide powder can provide excellent conditions.

The metal oxide powder may be a powder of the metal oxides as exemplified above (e.g., zirconium oxide powder, titanium oxide powder, alumina powder, etc.).

The metal oxide powder may be a powder of the same metal oxide used for the inorganic-organic hybrid compound, or may be a powder of a different metal oxide, but is preferably a powder of the same metal oxide used for the inorganic-organic hybrid compound.

For example, when the metal oxide used for the inorganic-organic hybrid compound contains zirconium oxide, the metal oxide powder preferably contains a zirconium oxide powder. Zirconium oxide is particularly excellent in alkali resistance and oxidation resistance.

The metal oxide powder may be a single type or a combination of two or more types.

The average particle size of the metal oxide powder may be, for example, 20 µm or less (e.g., 15 µm or less), preferably 10 µm or less (e.g., 5 µm or less), although it depends on the type of the metal oxide powder.

The measurement method of the average particle size is not particularly limited, and a known method may be used. For example, a laser diffraction particle size distribution analyzer, a dynamic light scattering particle size distribution analyzer, etc. can be used.

The amount of the metal oxide powder in the composition is, for example, from 0.5 parts by mass to 4 parts by mass, preferably from 0.7 parts by mass to 3.5 parts by mass, even more preferably from 1.4 parts by mass to 2.8 parts by mass relative to 1 part by mass of the polyvinyl alcohol-based resin to prevent the swelling, prevent the inhibition of an electrolysis reaction and charge and discharge reactions, and achieve the flexibility and strength of the resulting membrane, etc.

### Additional components

The composition of the invention may further contain, as necessary, an additional component other than the inorganic-organic hybrid compound or the hydrophobic resin (or the metal oxide powder). For example, the composition may further contain water, an inorganic compound, a resin that does not belong to the PVA-based resin or the hydrophobic resin as described above, or other ingredients.

The additional component may be a single type or a combination of two or more types.

The components (or ingredients) used for production of the composition or the membrane, and components derived from the components (e.g., the solvent components, water soluble compounds having a hydroxyl group, such as the compound (A)) may reside in the composition of the invention to the extent that the performance of the composition and the membrane is not impaired, or alternatively such residual components may be removed as much as possible (the composition may be purified) depending on the residual components or other factors. In some cases, the residual components preferably reside in the composition to achieve certain performance or other characteristics of the composition or the membrane although it depends on their amounts.

For example, the amount of the water soluble compound having a hydroxyl group (e.g., the compound (A)) contained in the composition of the invention is, for example, 5 mass% or less, preferably 0.5 mass% or less, and is, for example, 0.01 mass% or more, 0.1 mass% or more, etc. relative to the total amount of the composition.

The composition of the invention can be produced by blending the components. All the components may be blended at once, or two or more components may be first blended and then the remaining components may be blended. The blending method is not particularly limited and a conventional method can be used.

### Membrane

The composition of the invention can be used to form various types of membranes, or the composition can be formed into various types of membranes. The present invention thus also includes a membrane formed of the composition of the invention.

Suitable membranes that can be prepared using the composition of the invention include a separator, in particular, a separator for an electrolytic device or a battery (e.g., a separator for an electrolytic device or a battery using an alkaline electrolyte).

The membrane may be any membrane produced using the composition of the present invention as a material. The membrane may be a membrane formed of the composition of the invention, or the membrane may further contain a membrane support (or a reinforcing material).

The inorganic-organic hybrid compound may be present independently of the hydrophobic resin in the membrane, or one of these components may be dispersed in the other component. For example, the inorganic-organic hybrid compound and the hydrophobic resin may together form a sea-island structure. In the sea-island structure, the island component has a maximum particle size of, for example, 50 µm or less. The size (e.g., particle size) of the sea and island areas or the particle size can be examined with, for example, a scanning electron microscope, etc.

Examples of the membrane support include a pored or porous membrane (or a sheet), etc., for example, a sheet of a polyolefin such as polypropylene or polyethylene.

The membrane support may be a single type or a combination of two or more types.

The membrane support has a thickness of, for example, 5 to 5000 µm, preferably 20 to 1000 µm.

The membrane support may be arranged in the membrane in any manner. The membrane support may be incorporated within the membrane formed of the composition of the invention. The membrane support may be in contact with the outer face (or a surface) of the membrane. Preferably, the membrane support is incorporated within the membrane.

The membrane support may be a single type or a combination of two or more types.

Examples of the electrolytic device using the membrane of the invention include electrolytic hydrogen generators using an alkaline electrolyte (e.g., an aqueous alkaline electrolyte).

Electrolytic hydrogen generators are capable of generating hydrogen and are thus also capable of generating other products through reduction or hydrogenation. For example, electrolytic hydrogen generators can serve as a device for producing an organic substance by reducing carbon dioxide, i.e., a carbonate, dissolved in the electrolyte (a carbonate reduction device) or a device for producing ammonia by reaction with nitrogen (an ammonia generator).

Examples of the battery using the (non-porous) separator of the invention include nickel-zinc batteries, manganese-zinc batteries, zinc-air batteries, iron-air batteries and fuel cells.

When the membrane of the invention is used as a separator for a nickel-zinc battery, the membrane of the invention, which is non-porous unlike conventional porous sheet separators, can prevent dendrites growing on the zinc electrode from penetrating the separator. Dendrites grow due to reduction of the dissolved zincate ions during charging, but when a separator prevents the permeation of zincate ions, the penetration of the separator by dendrites can be prevented. In this manner, the membrane of the invention (as a separator) prevents a short circuit due to dendrite generation in nickel-zinc batteries, and may improve the durability of the batteries. The same effects can be achieved when the membrane of the invention is used in manganese-zinc batteries, which use a manganese compound as a positive active material.

The separator of the invention can also be used in alkaline fuel cells to prevent the penetration of hydrogen or other fuels supplied to the negative electrode and oxygen supplied to the positive electrode, thereby improving energy efficiency. The separator of the invention also has improved alkali resistance and excellent durability, unlike conventional non-porous separators composed only of an inorganic-organic hybrid compound containing a polyvinyl alcohol to which zirconium oxide is chemically bonded.

When the (non-porous) separator of the invention is used in a zinc-air battery, the separator of the invention efficiently prevents oxygen supplied to the positive electrode from reaching the negative electrode through the separator, thereby preventing self-discharge. When the separator of the invention is used in other metal-air batteries such as iron-air batteries, the same effects can be achieved.

The separator of the invention can also be used in alkaline fuel cells to prevent the penetration of hydrogen or other fuels supplied to the negative electrode and oxygen supplied to the positive electrode, thereby improving energy efficiency. The separator of the invention also has improved alkali resistance and excellent durability, unlike conventional non-porous separators composed only of an inorganic-organic hybrid compound containing a polyvinyl alcohol to which zirconium oxide is chemically bonded.

The electrolytic devices or batteries for which the membrane of the invention is used may have a configuration in which an electrode (e.g., an electrode containing a metal powder) is in contact with or is in close contact with the membrane (the separator) of the invention.

The thickness of the membrane of the invention can be set as appropriate for its usage, etc. The thickness of the membrane formed of the composition of the invention is, for example, 5000 µm or less, preferably 300 µm or less, more preferably 100 µm or less, and is, for example, 5 µm or more, preferably 10 µm or more, more preferably 20 µm or more.

For example, in cases of the membrane for an electrolytic device, the thickness of the membrane formed of the composition of the invention (the thickness of the membrane itself) is, for example, 5000 µm or less, preferably 300 µm or less, more preferably 100 µm or less, and is, for example, 5 µm or more, preferably 20 µm or more, more preferably 50 µm or more.

The electrodes for an electrolytic device are ideally made of a material with a large surface area, such as powder, whiskers and fibers to reduce reaction resistance. The separator is desirably thin as much as possible to achieve small resistance (high ion conductivity). Conventional porous sheet separators, when excessively thin, may have a risk of penetration of an electrode by a powder, whiskers, fibers, etc. and may also easily tear, and thus the thickness of conventional porous sheet separators is typically set at more than 300 µm.

In contrast, the membrane (separator) of the invention, unlike conventional separators, has no macropores, and therefore even when the membrane is made thin, a short circuit or a tear is less likely to occur and the membrane can be made into a thickness of 300 µm or less. Electrolytic devices are generally assembled by stacking a large number of cells in series. With use of the membrane (separator) of the invention, the separator can be made thin and the overall size of a device can be made small. For example, a high performance thin electrode made of a micropowder with a large surface area can be brought into close contact with the separator and used in practice, which can contribute to further miniaturization of a device.

The thickness of the membrane formed of the composition of the invention used for a battery (the thickness of the membrane itself) is, for example, 100 µm or less (e.g., less than 100 µm), preferably 20 µm or less, more preferably 10 µm or less, and is, for example, 1 µm or more, preferably 2 µm or more, more preferably 5 µm or more.

In batteries, a micropowder, which tends to cause a short circuit, may be used as an active material or a conductive agent for electrodes, or a short circuit may be easily caused by burrs of a current collector substrate. The thickness of a conventional porous sheet separator is thus usually 100 µm or more.

In contrast, the membrane (separator) of the invention has no macropores and is less likely cause a short circuit even when the membrane is made thin, and therefore the thickness can be made less than 100 µm, which can contribute to further miniaturization of batteries.

The membrane of the invention may further contain a water soluble compound having a hydroxyl group, such as a compound (A).

The amount of the water soluble compound having a hydroxyl group (e.g., compound (A)) in the membrane of the invention is, for example, 5 parts by mass or less, preferably 0.5 parts by mass or less, and is, for example, 0.01 parts by mass or more, 0.1 parts by mass or more relative to 1 part by mass of the PVA-based resin.

### Production method of membrane

The present invention also includes a method for producing a membrane using the composition of the present invention.

The composition of the present invention can be cast on a plate and heated to produce a membrane. The composition when cast on a plate is in a solution state and can be degassed before casting.

The heating temperature is not particularly limited, and can be adjusted as appropriate for the hydrophobic resin or other materials to be used. For example, the heating temperature is about 50 to 140°C. The heating temperature can be changed in a stepwise manner. For example, the composition is cast on a plate at 50 to 60°C, and then the temperature can be increased to a higher temperature (e.g., 100 to 140°C).

The heating time is not particularly limited, and can be adjusted as appropriate for the thickness or other factors of the membrane to be produced. For example, the heating time is 30 minutes to 5 hours, preferably 1 to 3 hours.

The membrane produced by heating can be subjected to washing, for example, in hot water (e.g., in hot water at 50 to 80°C), drying, etc.

The washing time is not particularly limited, and may be, for example, 15 minutes to 3 hours.

The drying temperature is not particularly limited and may be, for example, 50 to 120°C. The drying time is not particularly limited and may be, for example, 15 minutes to 3 hours.

The washing and drying can be repeated several times.

The casting, heating, washing and drying as described above can be performed using known devices or methods.

The present invention also includes a method for producing a membrane, the method comprising the above method (or the step or steps) for producing the inorganic-organic hybrid compound of the invention.

An exemplary method for producing the membrane of the invention will be described below.

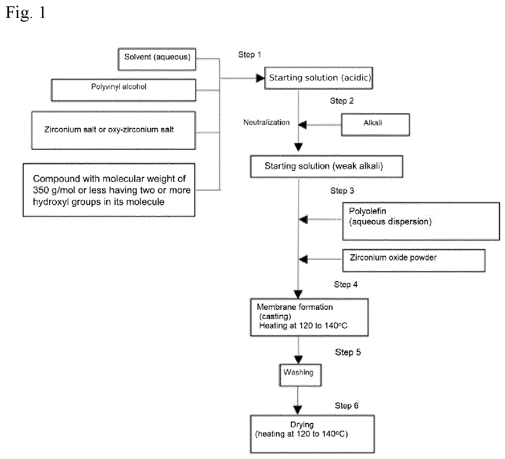

Fig. 1 schematically shows representative steps for production of the membrane.

In step 1, a starting solution is prepared by blending a solvent, a water soluble compound having a hydroxyl group (e.g., a compound (A) having two or more hydroxyl groups in its molecule and having a molecular weight of 350 g/mol or less), a salt corresponding to a metal oxide (e.g., a metal salt or an oxy-metal salt such as a zirconium salt or an oxy-zirconium salt) and a polyvinyl alcohol-based resin.

The polyvinyl alcohol-based resin, the salt corresponding to a metal oxide, and the water soluble compound having a hydroxyl group (e.g., the compound (A)) have excellent solubility to water, and therefore the solvent preferably contains water.

The compound (A) may be glycerin; diglycerin; a low molecular weight polyglycerin having a molecular weight of 350 g/mol or less; diethylene glycol; a low molecular weight polyethylene glycol having a molecular weight of 350 g/mol or less; a low molecular weight polyvinyl alcohol having a molecular weight of 350 g/mol or less; a sugar (e.g., a monosaccharide such as glucose, or a disaccharide such as sucrose) or a derivative thereof; a sugar alcohol (e.g., xylitol, sorbitol, maltitol, etc.) or a derivative thereof; a polyoxyalkylene polyglyceryl ether having a molecular weight of 350 g/mol or less; etc. as exemplified above. These may be a single type or a combination of two or more types.

The salt corresponding to a metal oxide may be a chloride, a nitrate, a sulfate, an acetate, etc. as exemplified above.

In step 2, an alkali is added to the starting solution prepared in step 1.

Addition of an alkali allows the salt corresponding to a metal oxide such as a zirconium salt or an oxy-zirconium salt, etc. to be converted into a metal oxide such as zirconium oxide, etc.

The alkali is not particularly limited, and may be, for example, sodium hydroxide, potassium hydroxide, lithium hydroxide, ammonia, etc.

A newborn small-sized metal oxide such as zirconium oxide by addition of the alkali is unstable, and if a polyvinyl alcohol does not co-exist, the metal oxide is bonded to each other and grows to precipitate as a powder of the metal oxide such as zirconium oxide. However, when a polyvinyl alcohol co-exists as in the production steps of the invention, such a newborn unstable small-sized metal oxide will bond to the nearby hydroxyl groups of the polyvinyl alcohol by dehydration condensation to form the inorganic-organic hybrid compound.

The aqueous solution may not be completely neutralized by addition of the alkali, and may be a weak alkali.

The water soluble compound having a hydroxyl group such as the compound (A) may efficiently prevent gelation due to addition of the alkali.

When an alkali is added to a starting solution in which the water soluble compound having a hydroxyl group co-exists, rapid gelation is prevented and solidification does not easily occur, thereby easily forming a membrane with good properties.

The reasons why the water soluble compound having a hydroxyl group such as the compound (A) prevents gelation in this manner remains unclear, but probably, the compound temporally attaches to the hydroxyl groups of the polyvinyl alcohol so as to cap them to intervene rapid advancement of hybridization with a metal oxide such as zirconium oxide and to prevent gelation.

The amount of the water soluble compound having a hydroxyl group (e.g., compound (A)) contained in the aqueous solution is, for example, 0.3 parts by mass or more, preferably 0.5 parts by mass or more relative to 1 part by mass of the polyvinyl alcohol-based resin to prevent gelation during neutralization of the starting solution and other purposes. The amount of the water soluble compound having a hydroxyl group (e.g., compound (A)) contained in the aqueous solution is, for example, 8 parts by mass or less, preferably 6 parts by mass or less relative to 1 part by mass of the polyvinyl alcohol-based resin to reduce discarding of unnecessary organic substances and other purposes. To prevent the gelation, the compound (A) is preferably glycerin.

In step 3, a hydrophobic resin such as a polyolefin and a metal oxide powder such as a zirconium oxide powder are added to the starting solution obtained in step 2.

The hydrophobic resin can be added to the starting solution in any manner. Since an aqueous solvent is used in a standard solution, a hydrophobic polyolefin powder is difficult to homogeneously disperse. Thus, the hydrophobic resin is preferably added in the form of an aqueous dispersion.

The hydrophobic resin and its aqueous dispersion, and the metal oxide powder may be those as exemplified above.

In step 4, the starting solution obtained in step 3 is formed into a membrane.

For example, the starting solution is formed into a membrane by a usual casting method and heated to remove the solvent to produce a membrane.

After removal of the solvent, the membrane is further heated to promote the hybridization and increase the strength of the membrane. In this case, the heating temperature for further heating is preferably 100°C or more, more preferably 120 to 140°C.

When a membrane containing a membrane support is produced, the support can be inserted during these membrane production steps. The insertion method is not particularly limited, and, for example, the starting solution may be cast onto the support, or the support may be placed on the cast starting solution, or the starting solution is further placed on the support on the cast starting solution so that the support is sandwiched by the layers of the solution.

In step 5, the membrane obtained in step 4 is washed. Washing can be performed in water or in hot water (e.g., hot water of 50 to 80°C).

Washing removes the compound (A) and unnecessary salts produced by the addition of the alkali and other unnecessary substances. The compound (A) and other unnecessary substances prevent hybridization between the polyvinyl alcohol and the metal oxide and are therefore preferably removed by washing in this step.

The membrane after washing in step 5 may be dried and used as it is, or alternatively may be further heated in step 6 to further increase the strength of the membrane. By removing the compound (A) and other unnecessary substances in the washing step, further hybridization proceeds in this heating step and the strength of the membrane is increased. The heating temperature is preferably 100°C or more, more preferably 120 to 140°C.

### Battery or electrolytic device

The present invention also includes a battery or an electrolytic device formed of the membrane of the present invention.

Examples of the battery or the electrolytic device include those exemplified above.

The battery or the electrolytic device can be produced by any known method.

### EXAMPLES

Hereinafter, the present invention will be described in more detail by examples. However, the present invention is not limited these examples.

### Example 1

An aqueous solution prepared by dissolving 1.7 g of glycerin (molecular weight: 92.1 g/mol) and 0.65 g of zirconium oxyacetate (ZrO(CH₃COO)₂) in 10 cc of water was mixed with 10 g of a 12 mass% aqueous solution of polyvinyl alcohol (JP-33, manufactured by JAPAN VAM & POVAL CO., LTD.) (the viscosity of a 4 mass% aqueous solution: 75.2 mPa·s, the degree of saponification: 87.3 mol%) to prepare a solution.

To the solution under stirring, 1.9 mL of a 3 N aqueous sodium hydroxide solution was added dropwise to neutralize the solution to give a weakly alkaline solution.

To the solution under stirring, 3.9 g of an aqueous dispersion of polyethylene (PE) (20.3 mass% of Arrowbase RSD 1010 manufactured by UNITIKA Ltd.) was added dropwise. Then, 3.4 g of a zirconium oxide powder (average particle size: 1 µm) dispersed in 5 cc of water was added to give a starting solution.

The amounts of glycerin, zirconium oxide (ZrO₂) formed from zirconium oxyacetate, polyethylene and the zirconium oxide powder contained the starting solution were 1.4 parts by mass, 0.3 parts by mass, 0.66 parts by mass and 2.8 parts by mass, respectively, relative to 1 part by mass of the polyvinyl alcohol.

The starting solution was degassed and then cast on a polyester film placed on a smooth plate of a flat heater. When the starting solution was cast, the plate of the heater was heated to be 50°C to 60°C under control. Immediately after the casting, the starting solution was spread with a doctor blade capable of adjusting the gap between the plate and the blade using a micrometer to a constant thickness. The spread solution was allowed to stand under heating at 50°C to 60°C to remove the moisture. After substantial reduction in the fluidity was observed, the temperature of the plate was increased to 120°C and heating was performed for 2 hours while maintaining the conditions. The resulting membrane product was peeled off from the plate, and washed in hot water at 60°C to 70°C for 30 minutes twice, and then heated at 120°C for 1 hour to give a membrane. The produced membrane had a thickness of 110 µm.

### Example 2

A membrane was produced in the same manner as in Example 1 except that the amount of polyethylene was changed to 0.43 parts by mass relative to 1 part by mass of polyvinyl alcohol.

### Example 3

A membrane was produced in the same manner as in Example 1 except that the amount of the zirconium oxide powder was changed to 1.4 parts by mass relative to 1 part by mass of polyvinyl alcohol.

### Example 4

A membrane was produced in the same manner as in Example 1 except that the amount of the zirconium oxide powder was changed to 0.7 parts by mass relative to 1 part by mass of polyvinyl alcohol.

### Example 5

A membrane was produced in the same manner as in Example 1 except that the amount of glycerin was changed to 0.5 parts by mass relative to 1 part by mass of polyvinyl alcohol.

### Example 6

A membrane was produced in the same manner as in Example 1 except that the amount of glycerin was changed to 2.8 parts by mass relative to 1 part by mass of polyvinyl alcohol.

### Example 7

A membrane was produced in the same manner as in Example 1 except that the aqueous dispersion of polyethylene was changed to an aqueous dispersion of polypropylene (PP) (27.9 wt% of Arrowbase RDC 1010 manufactured by UNITIKALtd.) and that the amount of polypropylene was 0.43 parts by mass relative to 1 part by mass of polyvinyl alcohol.

### Example 8

A membrane was produced in the same manner as in Example 1 except that glycerin was changed to diethylene glycol (molecular weight: 106.1 g/mol) and that the amount of diethylene glycol was 2 parts by mass relative to 1 part by mass of polyvinyl alcohol.

### Example 9

A membrane was produced in the same manner as in Example 1 except that glycerin was changed to D(+)-glucose (molecular weight: 180.2 g/mol) and that the amount of D(+)-glucose was 3 parts by mass relative to 1 part by mass of polyvinyl alcohol.

### Example 10

A membrane was produced in the same manner as in Example 1 except that glycerin was changed to sucrose (molecular weight: 342.3 g/mol) and that the amount of sucrose was 6 parts by mass relative to 1 part by mass of polyvinyl alcohol.

### Example 11

A membrane was produced in the same manner as in Example 1 except that a half amount of the starting solution was first cast, then a polypropylene mesh sheet (thickness of 160 µm, 156 × 100 mesh) was placed thereon, and the remaining of the starting solution was cast on the mesh sheet so that the porous sheet (mesh sheet) serving as a reinforcing material was inserted into the membrane. The produced membrane had a thickness of 270 µm.

### Example 12

A membrane was produced in the same manner as in Example 1 except that the zirconium oxide powder was not added and that the amount of polyethylene was changed to 0.43 parts by mass relative to 1 part by mass of polyvinyl alcohol.

### Comparative Example 1

A membrane with a conventional composition according to a conventional production method was prepared as follows.

An aqueous solution was prepared by dissolving 0.65 g of zirconium oxyacetate (ZrO(CH₃COO)₂) in 10 cc of water was mixed with 10 g of a 12 mass% aqueous solution of polyvinyl alcohol (JP-33, manufactured by JAPAN VAM & POVAL CO., LTD.) (the viscosity of a 4 mass% aqueous solution: 75.2 mPa·s, the degree of saponification: 87.3 mol%) to prepare a starting solution.

The starting solution was degassed and then cast on a polyester film placed on a smooth plate of a flat heater. When the starting solution was cast, the plate of the heater was heated to be 50°C to 60°C under control. Immediately after the casting, the starting solution was spread with a doctor blade capable of adjusting the gap between the plate and the starting solution using a micrometer to a constant thickness. The spread solution was allowed to stand under heating at 50°C to 60°C to remove the moisture. After substantial reduction in the fluidity was observed, the temperature of the plate was increased to 120°C and heating was performed for 2 hours while maintaining the conditions. The resulting membrane product was peeled off from the plate, and immersed in a 1.67 mass% aqueous ammonia solution under normal temperature for 18 hours. The membrane product was washed in hot water at 60°C to 70°C for 30 minutes twice, and then heated at 120°C for 1 hour to give a membrane.

### Heat and alkali resistance

The membranes produced in Examples 1 to 12 and Comparative Example 1 were evaluated for heat and alkali resistance by the following method.

A 3 cm square sample was cut out from each of the membranes, and the sample was immersed in a 40 cc of a 1 N aqueous sodium hydroxide solution and allowed to stand in a thermostatic chamber at 80°C for 24 hours. The sample was taken out from the solution, and the size of the sample was measured immediately after that to determine the percentage of area expansion from changes in size before and after the immersion in the aqueous alkali solution. The sample was washed with water and dried and was subjected to mass measurement to determine the percentage of mass loss before and after the immersion in the aqueous alkali solution.

### Hydroxide ion conductivity

The membranes produced in Examples 1 to 12 and Comparative Example 1 were evaluated for hydroxide ion conductivity by the following method.

Two glass chambers separated only by a sample of each of the produced membranes were prepared and filled with a 30 mass% aqueous potassium hydroxide solution and a 1 × 1 cm nickel porous electrode was placed in each of the glass chambers. The cross-sectional area of the region separated by the membrane sample was 0.79 cm² (diameter: 1 cm), and the amount of the aqueous potassium hydroxide solution in each chamber was 5 cc. The electrodes were placed apart from the membrane sample, and the distance between the electrodes was 6 cm. A voltage from a direct current power source was applied between the two electrodes to perform electrolysis of water at 25°C. The voltage between the electrodes was measured by changing the electric current density between 10 to 100 mA/cm² per cross-sectional area of the membrane to determine the resistance. Measurement was also conducted without separation of the membrane. The hydroxide ion conductivity of the membrane was determined from the resistance due to the membrane calculated by subtracting the resistance without the membrane from the resistance with the membrane.

The evaluation results for Examples 1 to 12 and Comparative Example 1 are shown in Table 1.

**Table 1**

| | Polyolefin (parts by mass) *1 | ZrO₂ powder (parts by mass) *2 | Mass loss (%) | Area expansion (%) | Hydroxide ion conductivity (Scm⁻¹) |
|---|---|---|---|---|---|
| Example 1 | PE 0.66 | 2.8 | 0 | 11 | 1.7 × 10⁻² |
| Example 2 | PE 0.43 | 2.8 | 6 | 15 | 2.0 × 10⁻² |
| Example 3 | PE 0.66 | 1.4 | 0 | 20 | 1.4 × 10⁻² |
| Example 4 | PE 0.66 | 0.7 | 0 | 25 | 3.1 × 10⁻³ |
| Example 5 | PE 0.66 | 2.8 | 0 | 12 | 1.4 × 10⁻² |
| Example 6 | PE 0.66 | 2.8 | 0 | 18 | 2.6 × 10⁻² |
| Example 7 | PP 0.43 | 2.8 | 0 | 12 | 9.9 × 10⁻³ |
| Example 8 | PE 0.66 | 2.8 | 0 | 13 | 3.1 × 10⁻³ |
| Example 9 | PE 0.66 | 2.8 | 0 | 10 | 1.9 × 10⁻³ |
| Example 10 | PE 0.66 | 2.8 | 0 | 13 | 2.3 × 10⁻³ |
| Example 11 (with reinforcing support) | PE 0.66 | 2.8 | 0 | 0 | 1.7 × 10⁻² |
| Example 12 | PE 0.43 | - | 7 | 30 | 2.3 × 10⁻² |
| Comparative Example1 | - | - | 30 | 71 | 1.4 × 10⁻² |

| | | | | | |
|---|---|---|---|---|---|
| *1 Amount of polyolefin relative to 1 part by mass of polyvinyl alcohol. *2 Amount of zirconium oxide powder relative to 1 part by mass of polyvinyl alcohol. | | | | | |

The membrane of Comparative Example 1 containing no polyolefin and produced by a conventional processes largely swelled by immersion in the alkali under heating, and the membrane area increased by 71%, and the membrane strength largely decreased. Large mass loss by immersion in the alkali under heating was also observed, and heat and alkali resistance was poor.

In contrast, the membranes of Examples 1 to 12 showed excellent alkali resistance compared with the conventional membrane of Comparative Example 1, and showed sufficient resistance even in the alkali under heating.

The membranes of Examples 1 to 12 had a hydroxide ion conductivity of an order of 10⁻³ to 10⁻² S/cm, showing sufficient conductivity at normal temperature.

### Example 13

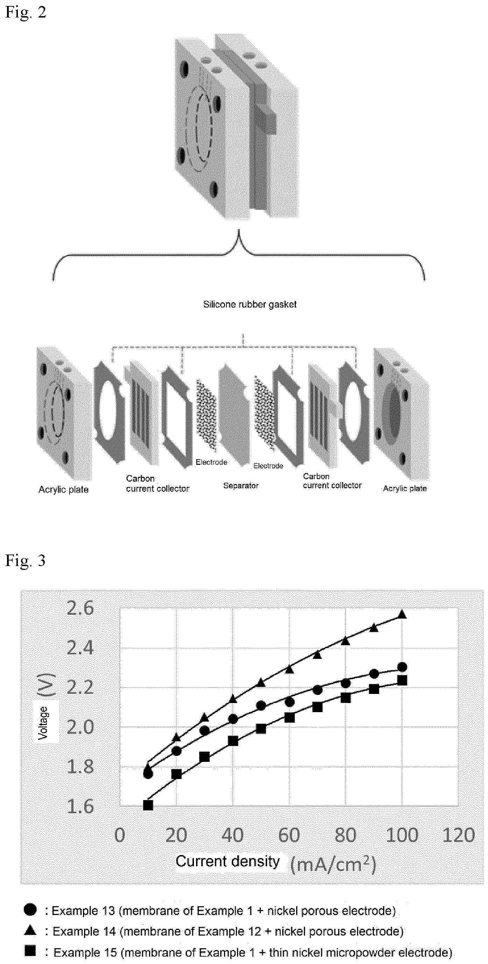

Using the membrane (thickness: 110 µm) of Example 1, an acrylic electrolytic device in which electrodes are in close contact with the membrane was produced as shown in Fig. 2. The performance of the electrolytic device as an electrolytic hydrogen generator was compared with other electrolytic devices using different membranes. The anode chamber was separated from the cathode chamber by the membrane, and the anode and cathode electrodes made of a nickel porous body are close contact with the each face of the membrane. The area separated by the membrane was a 2 cm square, and the size of the electrodes was 1.5 cm square and the thickness of the electrodes was 1 mm. The chambers were filled with a 30 mass% aqueous potassium hydroxide solution, and a voltage from a direct current power source was applied between the two electrodes to perform electrolysis of water at 25°C. The voltage between the electrodes was measured by changing the electric current density between 10 to 100 mA/cm² per cross-sectional area of the electrodes.

### Example 14

The measurement was performed in the same manner as in Example 13 except that the membrane of Example 12 was used instead of the membrane of Example 1.

### Example 15

An electrolytic device with the same configuration as that in Example 13 was produced using the membrane of Example 1 except that a thin electrode made of a nickel micropowder was used. The performance of the electrolytic device as an electrolytic hydrogen generator was evaluated. The electrodes were prepared by kneading 95 mass% of nickel micropowder (T255, VALE, particle size: 2.2 to 2.8 µm) together with 5 mass% of a polytetrafluoroethylene resin, and rolling the mixture into a sheet. The sheet was attached to each face of the membrane. The electrodes had a size of 1.5 cm square and a thickness of 0.1 mm.

The evaluation results of Examples 13 to 15 are shown in Fig. 3.

As shown in Fig. 3, all of the electrolytic devices of Examples 13 and 15 showed very excellent electrolysis performance.

The membrane of Example 1 had a thickness of 110 µm, but a short circuit or other problems did not occur even when the thin electrodes containing the micropowder were attached to the membrane (Example 15), and this configuration with the thin electrodes showed a lower voltage with the same electric current, indicating better energy efficiency.

Example 13 using the membrane of Example 1 showed better electrolysis performance as compared with Example 14 using the membrane of Example 12. The membrane of Example 1 containing the zirconium oxide powder probably exhibited decreased repellency of the aqueous alkaline electrolyte on the surface. The results suggest that the gas generated by electrolysis may be prevented from adsorbing to the membrane surface, thereby preventing the inhibition of the electrolysis reaction.

Noticeable temperature rise in the electrolytic devices was not observed in any of Examples 13 to 15. This is probably because the membranes of Examples 1 and 12 are in the form of a film that prevents the produced hydrogen gas and oxygen gas from passing through the separator, unlike conventional porous sheet separators. The results demonstrate that self-discharge is prevented and energy loss can be reduced not only in electrolytic devices but also in various metal-air batteries and fuel cells.

### Example 16: Zincate ion permeability

Zincate ion permeability of the membrane produced in Example 1 was examined by the following method.

Two glass chambers separated only by the membrane of Example 1 were prepared and filled with a 30 mass% aqueous potassium hydroxide solution, and 0.1 g of a zinc oxide powder was introduced to one chamber. The cross-sectional area separated by the membrane was 0.79 cm² (diameter: 1 cm), and the amount of the aqueous potassium hydroxide solution in each chamber is 5 cc. This glass cell for measurement was allowed to stand at 80°C for 1 hour, and then 3 mL of samples were taken from each of the chambers for measurement of the zinc concentration by ICP.

Of the two chambers of the measurement cell, the chamber containing the introduced zinc oxide had a dissolved zinc concentration of 3 g/L in the aqueous alkali solution, whereas the chamber containing no zinc oxide had a zinc concentration of 0.02 g/L. The results demonstrate that the membrane of Example 1 greatly reduced the permeation of zincate ions.

### Example 17

A membrane with the same composition as that in Example 1 was prepared in the same manner as in Example 1 except that the membrane thickness was changed to 60 µm. A nickel-zinc battery was produced using the membrane as a separator.

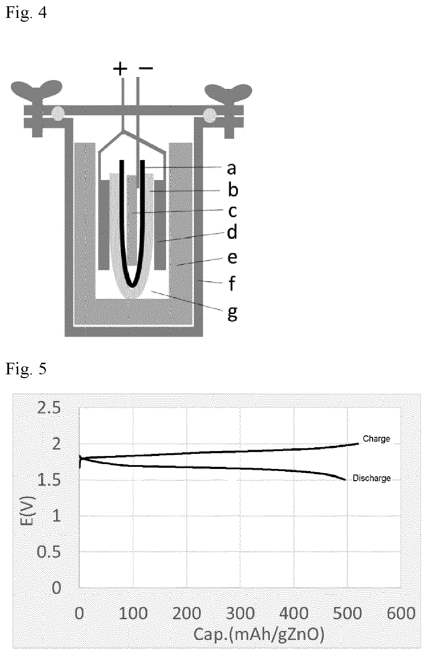

A zinc electrode was produced by mixing and kneading 85 mass% of a zinc oxide powder, 10 mass% of a carbon black powder (Kishida Chemical Co., Ltd.), and 5 mass% of a polytetrafluoroethylene resin, and forming the mixture into a circular sheet having a diameter of 20 mm. A tin-plated copper mesh having a diameter of 20 mm was sandwiched by two pieces of the circular sheets, and pressed with a pressure of 34 MPa to be formed into an electrode. The mass of zinc oxide contained in the electrode was 0.18 g. The produced negative electrode was inserted between two layers of the strip-shaped membrane folded in half with a width of 25 mm, and the membrane folded in half was inserted between two layers of a nonwoven porous sheet folded in half that is commonly used in nickel-hydrogen batteries, as shown in Fig. 4. In this arrangement, the surface of the negative electrode was in contact with the membrane. Nickel hydroxide electrodes (disk-shaped nickel porous bodies filled with nickel hydroxide, diameter: 20 mm) commonly used in nickel-hydrogen batteries were disposed to sandwich the nonwoven porous sheet. The assembled electrodes were placed in a cell vessel made of Teflon and stainless steel as shown in Fig. 4. Then, 0.5 mL of an alkaline electrolyte (27 mass% KOH, 3 mass% NaOH and 1 mass% LiOH) was injected into the battery. The battery was charged and discharged at a constant current of 120 mA per gram of the zinc oxide powder in a thermostatic chamber at 25°C.

The nickel-zinc battery produced as above could be charged and discharged without causing any problems (Fig. 5). Charging and discharging were repeated 40 times, and the battery was excellently charged and discharged without problems such as a short-circuit.

### Comparative Example 2

A nickel-zinc battery was produced in the same manner as in Example 17 except that the membrane was not used, and the battery test of Example 17 was performed.

The charge and discharge voltages of the nickel-zinc battery without the membrane greatly fluctuated at the 3rd and 4th cycles, and the battery was unable to be charged and discharged. This result is probably due to penetration of the porous sheet by zinc dendrites, which caused a short circuit.

### Example 18

A membrane was produced in the same manner as in Example 1 except that the amount of zirconium oxide (ZrO₂) formed from zirconium oxyacetate and the amount of polyethylene were changed to 0.28 parts by mass and 1 part by mass, respectively, relative to 1 part by mass of polyvinyl alcohol and that the zirconium oxide powder was not used.

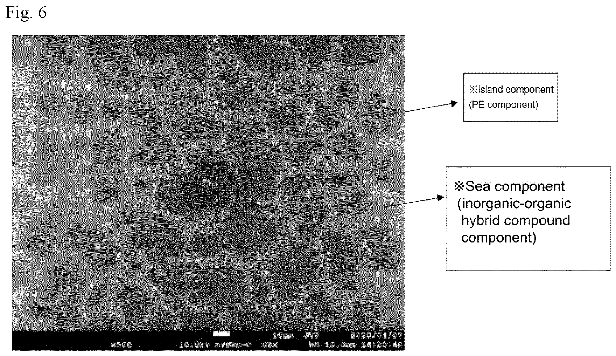

Fig. 6 shows an image of the membrane of Example 18 observed using a field emission scanning electron microscope (JSM-7800F PRIME, JEOL Ltd.) (10 kv, 500x).

As shown in Fig. 6, a sea-island structure is formed by the inorganic-organic hybrid compound and the polyolefin, and in this case, the polyolefin (polyethylene (PE)) forms the island component. Some of the island components of the polyolefin have a maximum particle size of 50 µm or less, indicating that the polyolefin is blended with the inorganic-organic hybrid compound region at a micro-scale.

### Example 19

A membrane was produced in the same manner as in Example 1 except that JL-25E (manufactured by JAPAN VAM & POVAL CO., LTD.) (the viscosity of a 4 mass% aqueous solution: 48.9 mPa·s, the degree of saponification: 79.6 mol%) was used as a polyvinyl alcohol instead of JP-33, and the evaluation of the membrane was performed. The same results as those in Example 1 were obtained.

### Example 20

A membrane was produced in the same manner as in Example 1 except that JP-45 (manufactured by JAPAN VAM & POVAL CO., LTD.) (the viscosity of a 4 mass% aqueous solution: 181.6 mPa·s, the degree of saponification: 89.5 mol%) was used as a polyvinyl alcohol instead of JP-33, and the evaluation of the membrane was performed. The same results as those in Example 1 were obtained.

### Example 21

A membrane was produced in the same manner as in Example 1 except that VC-10 (manufactured by JAPAN VAM & POVAL CO., LTD.) (the viscosity of a 4 mass% aqueous solution: 11.7 mPa·s, the degree of saponification: 99.6 mol%) was used as a polyvinyl alcohol instead of JP-33, and the evaluation of the membrane was performed. The same results as those in Example 1 were obtained.

### Example 22

A membrane was produced in the same manner as in Example 1 except that JM-17 (manufactured by JAPAN VAM & POVAL CO., LTD.) (the viscosity of a 4 mass% aqueous solution: 27.9 mPa·s, the degree of saponification: 95.8 mol%) was used as a polyvinyl alcohol instead of JP-33, and the evaluation of the membrane was performed. The same results as those in Example 1 were obtained.

### Example 23

A membrane was produced in the same manner as in Example 1 except that JMR-800P (manufactured by JAPAN VAM & POVAL CO., LTD.) (the viscosity of a 4 mass% aqueous solution: 1386 mPa·s, the degree of saponification: 88.8 mol%) was used as a polyvinyl alcohol instead of JP-33, and the evaluation of the membrane was performed. The same results as those in Example 1 were obtained.

The evaluation results for Examples 19 to 23 are shown in Table 2. Table 2 also shows the results for Example 1.

**Table 2**

| Examples | PVA | | Mass loss (%) | Area expansion (%) | Hydroxide ion conductivity (Scm⁻¹) |
|---|---|---|---|---|---|
| | Viscosity of 4 mass% aqueous solution (20°C, mPa·s) | Degree of saponification (mol%) | | | |
| 1 | 48.9 | 87.3 | 0 | 11 | 1.7 × 10⁻² |
| 19 | 48.9 | 79.6 | 0 | 10 | 3.5 × 10⁻³ |
| 20 | 181.6 | 89.5 | 0 | 12 | 1.7 × 10³ |
| 21 | 11.7 | 99.6 | 1.5 | 10 | 2.4 × 10⁻³ |
| 22 | 27.9 | 95.8 | 0 | 10 | 2.1 × 10⁻³ |
| 23 | 1386 | 88.8 | 0.1 | 7 | 3.0 × 10⁻³ |

### Example 24

A membrane was produced in the same manner as in Example 1 except that JL-05E (manufactured by JAPAN VAM & POVAL CO., LTD.) (the viscosity of a 4 mass% aqueous solution: 5.0 mPa·s, the degree of saponification: 81.0 mol%) was used as a polyvinyl alcohol instead of JP-33, and the evaluation of the membrane was performed. The same results as those in Example 1 were obtained (e.g., the mass loss was 5.4%, the percentage of area expansion was 17%).

### Example 25

A membrane was produced in the same manner as in Example 1 except that a vinyl chloride resin (VINYBLAN 985, vinyl chloride type, manufactured by Nissin Chemical Industry Co., Ltd.) was used instead of the aqueous dispersion of polyethylene, and the evaluation of the membrane was performed. The same results as those in Example 1 were obtained (e.g., the percentage of mass loss was 1.3%, the percentage of area expansion was 18%, the hydroxide ion conductivity was 7.1 × 10⁻³ Scm⁻¹).

### Example 26

A membrane was produced in the same manner as in Example 1 except that a vinyl chloride resin (VINYBLAN 278, vinyl chloride-acrylic copolymer type, manufactured by Nissin Chemical Industry Co., Ltd.) was used instead of the aqueous dispersion of polyethylene, and the evaluation of the membrane was performed. The same results as those in Example 1 were obtained (e.g., the percentage of mass loss was 0.4%, the percentage of area expansion was 15%, the hydroxide ion conductivity was 2.2 × 10⁻³ Scm⁻¹).

### Example 27

A membrane was produced in the same manner as in Example 1 except that titanium lactate was used instead of zirconium oxyacetate (ZrO(CH₃COO)₂), and that the heating conditions were changed. The evaluation of the membrane was performed. The same results as those in Example 1 were obtained (e.g., the percentage of mass loss was 1.5%, the percentage of area expansion was 14%, the hydroxide ion conductivity was 6.1 × 10⁻³ Scm⁻¹).

Specific membrane production method is as follows.

A starting solution was prepared in the same manner as in Example 1 except that 3.9 g of titanium lactate [which amount corresponds to 0.13 parts by mass of titanium oxide (TiO₂) relative to 1 part by mass of polyvinyl alcohol] was used instead of zirconium oxyacetate (ZrO(CH₃COO)₂). The starting solution was degassed and was then cast on a polyester film placed on a smooth plate of a flat heater.

When the starting solution was cast, the plate of the heater was heated to be 50°C to 60°C under control. Immediately after the casting, the starting solution was spread with a doctor blade capable of adjusting the gap between the plate and the starting solution using a micrometer to a constant thickness. The spread solution was allowed to stand under heating at 50°C to 60°C to remove the moisture. After substantial reduction in the fluidity was observed, the temperature of the plate was increased to 130°C and heating was performed for 2 hours while maintaining the conditions. The resulting membrane product was peeled off from the plate, and washed in hot water at 60°C to 70°C for 30 minutes twice, and then heated at 130°C for 1 hour to give a membrane. The produced membrane had a thickness of 130 µm.

### Example 28

A membrane was produced in the same manner as in Example 1 except that zirconium nitrate was used instead of zirconium oxyacetate (ZrO(CH₃COO)₂) and that the heating conditions were changed. The evaluation of the membrane was performed. The same results as those in Example 1 were obtained (e.g., the percentage of mass loss was 0%).

Specific membrane production method is as follows.

A starting solution was prepared in the same manner as in Example 1 except that 5.1 g of glycerin was used and that 0.47 g of a 47% aqueous solution of zirconium nitrate [which amount corresponds to 0.10 parts by mass of zirconium oxide (ZrO₂) relative to 1 part by mass of polyvinyl alcohol] was used instead of zirconium oxyacetate (ZrO(CH₃COO)₂). The starting solution was degassed and was then cast on a polyester film placed on a smooth plate of a flat heater.

When the starting solution was cast, the plate of the heater was heated to be 50°C to 60°C under control. Immediately after the casting, the starting solution was spread with a doctor blade capable of adjusting the gap between the plate and the starting solution using a micrometer to a constant thickness. The spread solution was allowed to stand under heating at 50°C to 60°C to remove the moisture. After substantial reduction in the fluidity was observed, the temperature of the plate was increased to 130°C and heating was performed for 2 hours while maintaining the conditions. The resulting membrane product was peeled off from the plate, and washed in hot water at 60°C to 70°C for 30 minutes twice, and then heated at 130°C for 1 hour to give a membrane. The produced membrane had a thickness of 130 µm.

### INDUSTRIAL APPLICABILITY

The present invention provides a composition useful for a separator, etc. for an electrolytic device or battery using an alkaline electrolyte.

## Claims

1. A composition comprising an inorganic-organic hybrid compound and a hydrophobic resin, wherein the inorganic-organic hybrid compound comprises a polyvinyl alcohol-based resin to which a metal oxide is chemically bonded.

2. The composition according to claim 1, further comprising a metal oxide powder.

3. The composition according to claim 1 or 2, wherein a 4 mass% aqueous solution of the polyvinyl alcohol-based resin has a viscosity of 5 mPa·s or more at 20°C.

4. The composition according to any one of claims 1 to 3, wherein a 4 mass% aqueous solution of the polyvinyl alcohol-based resin has a viscosity of 10 mPa·s or more at 20°C.

5. The composition according to any one of claims 1 to 4, wherein a 4 mass% aqueous solution of the polyvinyl alcohol-based resin has a viscosity of 15 mPa·s or more at 20°C, and the polyvinyl alcohol-based resin has a degree of saponification of 85 mol% or more.

6. The composition according to any one of claims 1 to 5, wherein the metal oxide comprises at least one selected from zirconium oxide and titanium oxide.

7. The composition according to any one of claims 1 to 6, wherein the hydrophobic resin has an SP value of 13 (cal/cm³)^{1/2} or less.

8. The composition according to any one of claims 1 to 7, wherein the hydrophobic resin comprises at least one selected from a polyolefin resin and a polyvinyl chloride resin.

9. The composition according to any one of claims 2 to 8, wherein the metal oxide powder comprises at least one selected from a zirconium oxide powder and a titanium oxide powder.

10. The composition according to any one of claims 1 to 9, wherein the hydrophobic resin comprises a polypropylene resin and/or a polyethylene resin.

11. The composition according to any one of claims 1 to 10, wherein the hydrophobic resin is contained in an amount of 0.3 parts by mass or more relative to 1 part by mass of the polyvinyl alcohol-based resin.

12. The composition according to any one of claims 2 to 11, wherein the zirconium oxide powder is contained in an amount of from 0.7 parts by mass to 3.5 parts by mass relative to 1 part by mass of the polyvinyl alcohol-based resin.

13. A membrane formed of the composition according to any one of claims 1 to 12.

14. The membrane according to claim 13, wherein the membrane is for a separator of an electrolytic device or a battery.

15. The membrane according to claim 13 or 14, wherein the inorganic-organic hybrid compound and the hydrophobic resin are present independently of each other.

16. The membrane according to any one of claims 13 to 15, further comprising a pored or porous membrane support.

17. The membrane according to claim 16, wherein the membrane support comprises a polypropylene sheet or a polyethylene sheet.

18. The membrane according to any one of claims 14 to 17, wherein the electrolytic device or the battery uses an alkaline electrolyte.

19. The membrane according to any one of claims 14 to 18, wherein the electrolytic device is an electrolytic hydrogen generator, an ammonia generator, or a carbonate reduction device.

20. The membrane according to any one of claims 13 to 19, wherein the membrane has a thickness of 300 µm or less.

21. The membrane according to any one of claims 14 to 20, wherein the battery is a nickel-zinc battery, a manganese-zinc battery, a zinc-air battery, an iron-air battery or a fuel cell.

22. The membrane according to any one of claims 13 to 21, wherein the membrane has a thickness of 100 µm or less.

23. The membrane according to any one of claims 13 to 22, wherein the membrane is for an electrolytic device or a battery having a configuration in which an electrode is in contact with a separator.

24. An electrolytic device or a battery using the membrane according to any one of claims 13 to 23.

25. A method for producing a membrane, the method comprising forming a membrane using the composition according to any one of claims 1 to 12.

26. A method for producing an inorganic-organic hybrid compound comprising a polyvinyl alcohol-based resin to which a metal oxide is chemically bonded, the method comprising adding an alkali to an aqueous solution containing a compound (A) having two or more hydroxyl groups in its molecule and having a molecular weight of 350 g/mol or less, a salt corresponding to a metal oxide, and a polyvinyl alcohol-based resin.

27. The production method according to claim 26, wherein the compound (A) is contained in an amount of from 0.5 parts by mass to 6 parts by mass relative to 1 part by mass of the polyvinyl alcohol-based resin in the aqueous solution.

28. The production method according to claim 26 or 27, wherein the compound (A) is at least one selected from glycerin, diethylene glycol, a monosaccharide and a disaccharide.

29. The production method according to any one of claims 26 to 28, wherein the compound (A) comprises glycerin.

30. A method for producing a composition comprising an inorganic-organic hybrid compound comprising a polyvinyl alcohol-based resin to which a metal oxide is chemically bonded, or for producing a membrane formed of the composition, the method comprising the production method according to any one of claims 26 to 29.

31. The production method of claim 30, further comprising adding a hydrophobic resin.

32. The production method according to claim 31, wherein the hydrophobic resin is in a form of an aqueous dispersion.

33. The production method according to claim 32, wherein the hydrophobic resin is an acid-modified hydrophobic resin.
